(19) Europäisches Patentamt
European Patent Office
Office européen des brevets

(11) **EP 3 226 232 B1**

(12) **EUROPEAN PATENT SPECIFICATION**

(45) Date of publication and mention
of the grant of the patent:
**24.11.2021 Bulletin 2021/47**

(21) Application number: **15778188.1**

(22) Date of filing: **20.04.2015**

(51) Int Cl.:
*G09G 3/32* (2016.01)    *G09G 3/36* (2006.01)

(86) International application number:
**PCT/CN2015/076950**

(87) International publication number:
**WO 2016/082438 (02.06.2016 Gazette 2016/22)**

(54) **ARRAY SUBSTRATE AND DRIVING METHOD THEREFOR, DISPLAY PANEL AND DISPLAY DEVICE**

ARRAYSUBSTRAT UND ANSTEUERUNGSVERFAHREN DAFÜR, ANZEIGETAFEL UND ANZEIGEVORRICHTUNG

SUBSTRAT DE RÉSEAU ET SON PROCÉDÉ D'EXCITATION, PANNEAU D'AFFICHAGE ET DISPOSITIF D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2014 CN 201410710892**

(43) Date of publication of application:
**04.10.2017 Bulletin 2017/40**

(73) Proprietor: **BOE Technology Group Co., Ltd.**
**Beijing 100015 (CN)**

(72) Inventors:
• **LEE, Chungchun**
**Beijing 100176 (CN)**
• **DUAN, Liye**
**Beijing 100176 (CN)**
• **LI, Yanzhao**
**Beijing 100176 (CN)**
• **WU, Chunwei**
**Beijing 100176 (CN)**
• **PARK, Hanjun**
**Beijing 100176 (CN)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
| CN-A- 101 923 826 | CN-A- 102 354 701 |
| CN-A- 103 745 684 | CN-A- 103 777 393 |
| CN-A- 103 855 192 | CN-A- 103 903 524 |
| CN-A- 103 904 105 | CN-A- 104 091 820 |
| CN-A- 104 134 426 | CN-A- 104 361 862 |
| US-A1- 2006 103 940 | US-A1- 2008 117 154 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The invention relates to the field of display technology, and in particular to an array substrate and a driving method thereof, a display panel and a display device.

### Background

With the development of technology, the resolution of a display panel is higher and higher. That is, the number of pixels in the unit area is increasing, which requires that size of each sub-pixel is becoming smaller and smaller. However, due to process constraints, apparently, the size of each sub-pixel cannot be decreased unlimitedly.

In order to improve the display effect under a given size of the sub-pixel, a display device in the Pentile mode is proposed. In the display device in the Pentile mode, sub-pixels of certain colors (such as red sub-pixels and blue sub-pixels) are decreased in number while sub-pixels of different colors in the display device are virtually considered to be in different "layers", and each layer is divided into a plurality of sampling regions, sampling regions in different layers are divided so that they are not overlapped with each other, and then content to be displayed by each sub-pixel is calculated by area ratio of the sampling regions. A part of sub-pixels in the display device in the Pentile mode are shared, so that the visual resolution is higher than the actual physical resolution. That is to say, compared to a conventional display panel, the display panel in the Pentile mode may have more pixel units formed thereon. However, as understood by persons skilled in the art, each pixel unit requires to be driven by one pixel circuit, and due to the limitation on the size of the display panel, although more pixel units may be fabricated, there is no way to fabricate more pixel circuits accordingly, thus it is still very difficult to fabricate a high resolution display panel.

Document CN104134426 describes a display comprising a plurality of circulating units and a plurality of pixel circuits, wherein each circulating unit consists of four sub-pixel units located in four columns and two rows, sub-pixel units in any two adjacent columns are located in different rows and have different colors, and sub-pixel units in at least one row have different colors;each sub-pixel unit is connected to one pixel circuit, and each sub-pixel unit comprises a first sub-pixel and a second sub-pixel located in the same column and having the same color; and the pixel circuit is configured to drive the first sub-pixel when a first frame picture is displayed, and to drive the second sub-pixel when a second frame picture is displayed. In other words, it describes a pentile arrangement with adjacent subpixels of the same color and driven in two consecutive frames in order to increase display resolution. Further, document CN103745684 describes a single pixel circuit able to drive simultaneously in the same frame two adjacent subpixels with different data connected to the same data line. In this manner aperture ratio is increased dramatically (number of data lines is also reduced) and resolution (more light emitting areas) can be increased accordingly.

### Summary of the Invention

In order to solve the above problems existing in the current display panels, embodiments of the invention provide a high resolution array substrate and a driving method thereof, a display panel and a display device.

According to an embodiment of the invention, an array substrate is provided to comprise a plurality of circulating units and a plurality of pixel circuits. Each circulating unit consists of four sub-pixel units located in four columns and two rows, sub-pixel units in any two adjacent columns are located in different rows and have different colors, and sub-pixel units in at least one row have different colors, wherein each subpixel unit of a circulating unit is connected to a different data line. Each sub-pixel unit is connected to one pixel circuit, each sub-pixel unit comprises a first sub-pixel and a second sub-pixel located in the same column and having the same color. Each pixel circuit of the plurality of pixel circuits comprises a first sub-pixel circuit and a second sub-pixel circuit, the first sub-pixel circuit comprises a first driving transistor and the second sub-pixel circuit comprises a second driving transistor, the first sub-pixel circuit and the second sub-pixel circuit share a compensation unit, and are controlled by a same data line, which is connected to a control unit; the compensation unit is configured to adjust a gate voltage of the first driving transistor in the first sub-pixel circuit to eliminate influence of a threshold voltage of the first driving transistor on a driving current of the first sub-pixel, and to adjust a gate voltage of the second driving transistor in the second sub-pixel circuit to eliminate influence of a threshold voltage of the second driving transistor on a driving current of the second sub-pixel; the compensation unit comprises a first switching transistor , a second switching transistor, a third switching transistor, a fourth switching transistor, a fifth switching transistor, a sixth switching transistor, a seventh switching transistor, an eighth switching transistor, a ninth switching transistor, a tenth switching transistor, a first storage capacitor and a second storage capacitor; a gate of the first switching transistor and a gate of the seventh switching transistor are connected to a first light emitting control line, a source of the first switching transistor is connected to a source of the second switching transistor and a first reference voltage source, and a drain of the first switching transistor is connected to a source of the fourth switching transistor and a source of the first driving transistor; a gate of the second switching transistor is connected to a gate of the eighth switching transistor and a second light emitting control line, and a drain of the second switching transistor is connected to a source of the fifth switching transistor and a source of the second switching transistor; a gate of the third switching transistor is connected to a gate of the fourth switching transistor and a first scanning line, a source of the third switching transistor is connected to the data line, a drain of the third switching transistor is connected to a second terminal of the first storage capacitor and a source of the seventh switching transistor; a drain of the fourth switching transistor is connected to a first terminal of the first storage capacitor and a gate of the first driving transistor; a gate of the fifth switching transistor is connected to a gate of the sixth switching transistor and a second scanning line, and a drain of the fifth switching transistor is connected to a first terminal of the second storage capacitor and a gate of the second driving transistor; a source of the sixth switching transistor is connected to the data line, a drain of the sixth switching transistor is connected to a second terminal of the second storage capacitor and a source of the eighth switching transistor; a drain of the seventh switching transistor is connected to a source of the ninth switching transistor, a drain of the first driving transistor and a first terminal of the first sub-pixel, and a second terminal of the first sub-pixel is grounded; a drain of the eighth switching transistor is connected to a source of the tenth switching transistor, a drain of the second driving transistor and a first terminal of the second sub-pixel, and a second terminal of the second sub-pixel is grounded; a gate of the ninth switching transistor is connected to a gate of the tenth switching transistor and the second scanning line, and a drain of the ninth switching transistor is grounded; and a drain of the tenth switching transistor is grounded;

and the pixel circuit is configured to drive the first sub-pixel when a first frame picture is displayed by delivering a first light emitting signal through the first light emitting line during the first emitting stage, and to drive the second sub-pixel when a second frame picture is displayed by delivering a second light emitting signal through the second light emitting line during the second emitting stage.

The circulating unit may comprise one red sub-pixel unit, one blue sub-pixel unit and two green sub-pixel units.

The circulating unit may comprise one red sub-pixel unit, one green sub-pixel unit, one blue sub-pixel unit and one white sub-pixel unit.

The pixel circuit may comprise a first sub-pixel circuit, a second sub-pixel circuit and a control unit. The first sub-pixel circuit is connected to the first sub-pixel, and the second sub-pixel circuit is connected to the second sub-pixel. The control unit is configured to control the first sub-pixel circuit to drive the first sub-pixel when the first frame picture is displayed, and to control the second sub-pixel circuit to drive the second sub-pixel when the second frame picture is displayed.

The array substrate may further comprise a plurality of data lines, and the first sub-pixel circuit and the second sub-pixel in each of the pixel circuits are connected to the same data line.

The pixel circuit may further comprise a compensation circuit, the first sub-pixel circuit may at least comprise a first driving transistor, and the second sub-pixel circuit may at least comprise a second driving transistor. The compensation circuit is configured to compensate for a threshold voltage of the first driving transistor in the first sub-pixel circuit, and to compensate for a threshold voltage of the second driving transistor in the second sub-pixel circuit.

According to embodiments of the invention, a driving method of the above array substrate is provided. The driving method comprises: driving, by the pixel circuit, the first sub-pixel in the sub-pixel unit connected to the pixel circuit when a first frame picture is displayed; and driving, by the pixel circuit, the second sub-pixel in the sub-pixel unit connected to the pixel circuit when a second frame picture is displayed.

According to embodiments of the invention, a display panel is provided to comprise the above array substrate.

According to embodiments of the invention, a display device is provided to comprise the above display panel.

In the array substrate of the embodiments of the invention, the first sub-pixel and the second sub-pixel in each sub-pixel unit are driven by the same pixel circuit, and compared to the prior art in which it is required to drive the first sub-pixel and the second sub-pixel in each sub-pixel unit using two pixel circuits, respectively, the number of the pixel circuits required in the entire array substrate is reduced, thus decreasing production cost and process pressure. At the same time, since the number of the pixel circuits is reduced, more sub-pixel units can be formed per unit area on the array substrate, thus effectively increasing resolution of the array substrate.

## Description of the drawings

Fig.1 is a schematic view of an array substrate according to an embodiment of the invention;

Fig. 2 is a schematic view of another array substrate according to an embodiment of the invention;

Fig.3 is a principle view of a pixel circuit according to an embodiment of the invention; and

Fig.4 is a timing chart of operation of the pixel circuit in Fig. 3.

**Detailed description of embodiments**

In order to make persons skilled in the art better understand the technical solutions of the invention, the invention will be further described in detail below in connection with the drawings and the implementations.

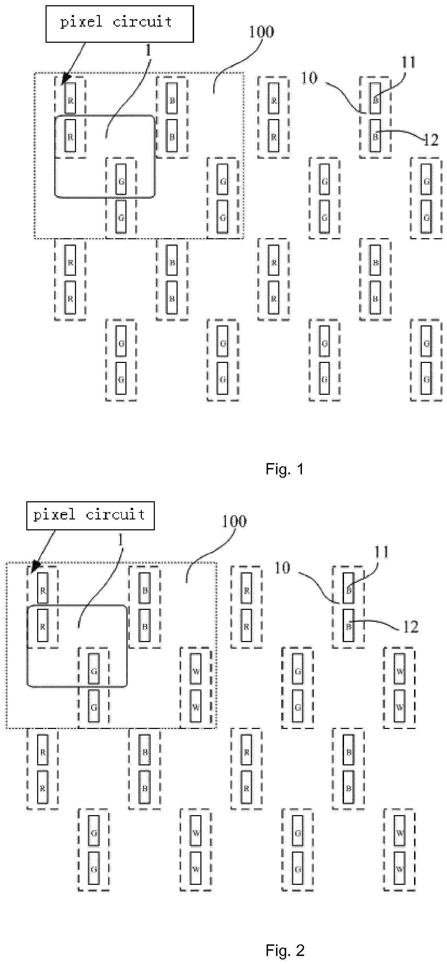

In connection with Figs.1 and 2, the embodiment of the invention provides an array substrate, which comprises a plurality of circulating units 100, each circulating unit 100 consists of four sub-pixel units 10 located in four columns and two rows, sub-pixel units 10 in every two adjacent columns are located in different rows and have different colors, and sub-pixel units 10 in at least one row have different colors. The array substrate further comprises a plurality of pixel circuits, each sub-pixel unit 10 is connected to one pixel circuit, each sub-pixel unit 10 comprises a first sub-pixel 11 and a second sub-pixel 12 located in the same column and having the same color. Each pixel circuit is configured to drive the first sub-pixel 11 when a first frame picture is displayed, and to drive the second sub-pixel 12 when a second frame picture is displayed.

In addition, a pixel unit 1 may comprise two sub-pixels, which are from two sub-pixel units 10 located in two adjacent columns, and the two sub-pixels are located in two adjacent rows.

It should be pointed out that, in order to achieve a high resolution display in the prior art, it is required to make the size of each sub-pixel smaller and smaller; however, due to process constraints, apparently, the size of the sub-pixel cannot be reduced unlimitedly. Thus, 2-in-1 technology, that is, two adjacent sub-pixels of the same color in the display panel share an opening in the FMM (Fine Metal Shadow Mask) is introduced in the invention, that is to say, in the embodiment, driving of the first sub-pixel 11 and the second sub-pixel 12 of each sub-pixel unit 10 when different frame pictures are displayed is achieved by one opening in the FMM. At the same time, since the respective pixel units 1 in the array substrate of the embodiment are arranged in the above manner, a high resolution display is achieved with less sub-pixels in a specific pixel sharing manner. For example, one pixel unit 1 in the embodiment may be only provided with two sub-pixels, a red sub-pixel R and a green sub-pixel G, and a blue sub-pixel B in an adjacent pixel unit 1 may be used to perform a normal display, so that more pixel units 1 can be fabricated per unit area on the array substrate, thus increasing the resolution of the array substrate.

In the embodiment, the first sub-pixel 11 and the second sub-pixel 12 of each sub-pixel unit 10 are driven by the same pixel circuit, and compared to the prior art in which it is required to drive the first sub-pixel 11 and the second sub-pixel 12 in each sub-pixel unit 10 using two pixel circuits, respectively, the number of the pixel circuits required in the entire array substrate is reduced, thus decreasing production cost and process pressure. At the same time, since the number of the pixel circuits is reduced, more sub-pixel units 10 can be formed per unit area on the array substrate, thus effectively increasing resolution of the array substrate.

As shown in Fig. 1, as a preferable implementation of the embodiment, one circulating unit 100 of the array substrate comprises four sub-pixel units 10, that is, one red sub-pixel unit, one blue sub-pixel unit, and two green sub-pixel units.

In particular, red sub-pixel units 10 and blue sub-pixel units 10 in odd rows are alternately arranged, and all sub-pixel units arranged in even rows are green. Alternatively, all sub-pixel units 10 arranged in odd rows are green, and red sub-pixel units 10 and blue sub-pixel units 10 are alternately arranged in even rows. The red sub-pixel unit 10 comprises a first red sub-pixel R and a second red sub-pixel R, the blue sub-pixel unit 10 comprises a first blue sub-pixel B and a second blue sub-pixel B, and the green sub-pixel unit 10 comprises a first green sub-pixel G and a second green sub-pixel G. When a first frame picture is displayed, each pixel circuit drives a first sub-pixel 11 of a sub-pixel unit 10 connected to the pixel circuit, when a second frame picture is displayed, the pixel circuit drives a second sub-pixel 12 of the sub-pixel unit 10 connected to the pixel circuit, and this time-sharing driving method can improve the resolution of the array substrate.

As shown in Fig. 2, as another preferable implementation of the embodiment, the circulating unit 100 comprises one red sub-pixel unit 10, one green sub-pixel unit 10, one blue sub-pixel unit 10 and one white sub-pixel unit 10. In this implementation, only the colors of the sub-pixels are different from those in the above implementation, and the driving method and the display principle are the same as those in the above implementation, which will not be described in detail here.

The pixel circuit in the embodiment may comprise a first sub-pixel circuit, a second sub-pixel circuit, and a control unit. The first sub-pixel circuit is connected to a first sub-pixel 11, the second sub-pixel circuit is connected to a second sub-pixel, and the control unit is configured to control the first sub-pixel circuit to drive the first sub-pixel 11 when a first frame picture is displayed, and to control the second sub-pixel circuit to drive the second sub-pixel 12 when a second frame picture is displayed.

Furthermore, the array substrate further comprises a plurality of data lines Data, and the first sub-pixel circuit and the second sub-pixel circuit of each of the pixel circuits are connected to the same data line Data. Thus, the structure of the array substrate may be simple.

Moreover, the pixel circuit of the embodiment may further comprise a compensation circuit. The first sub-pixel circuit at least comprises a first driving transistor, and the second sub-pixel circuit at least comprises a second driving transistor. The compensation circuit is configured to compensate for a threshold voltage of the first driving transistor in the first sub-pixel circuit, and to compensate for a threshold voltage of the second driving transistor in the second sub-pixel circuit. The two sub-pixel circuits share one compensation unit so that the threshold voltages of the driving transistors are compensated to improve the display effect, decrease the occupation area of the pixel circuits on the array substrate, and reduce the cost.

Accordingly, the embodiment further provides a driving method of any one of the above array substrates, which comprises: driving, by a pixel circuit, a first sub-pixel 11 in a sub-pixel unit 10 connected to the pixel circuit when a first frame picture is displayed; and driving, by the pixel circuit, a second sub-pixel 12 in the sub-pixel unit 10 connected to the pixel circuit when a second frame picture is displayed.

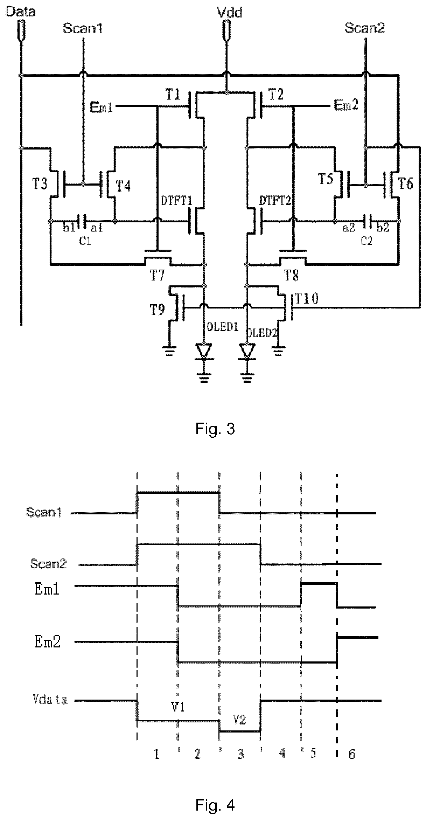

As a structure of a pixel circuit in the embodiment, as shown in Fig.3, each pixel circuit comprises a first sub-pixel circuit and a second sub-pixel circuit, the first sub-pixel circuit comprises a first driving transistor DTFT1 and the second sub-pixel circuit comprises a second driving transistor DTFT2. In Fig.3, a first display device OLED1 is equivalent to the first sub-pixel, and a second display device OLED2 is equivalent to the second sub-pixel. The first sub-pixel circuit and the second sub-pixel circuit share the compensation unit, and controlled by the same data line Data, which is connected to the control unit. The compensation unit is configured to adjust a gate voltage of the first driving transistor DTFT1 in the first sub-pixel circuit to eliminate the influence of the threshold voltage of the first driving transistor DTFT1 on the driving current of the first display device OLED1, and to adjust a gate voltage of the second driving transistor DTFT2 in the second sub-pixel circuit to eliminate the influence of the threshold voltage of the second driving transistor DTFT2 on the driving current of the second display device OLED2. The compensation unit may particularly comprise a first switching transistor T1, a second switching transistor T2, a third switching transistor T3, a fourth switching transistor T4, a fifth switching transistor T5, a sixth switching transistor T6, a seventh switching transistor T7, an eighth switching transistor T8, a ninth switching transistor T9, a tenth switching transistor T10, a first storage capacitor C1 and a second storage capacitor C2. A gate of the first switching transistor T1 and a gate of the seventh switching transistor T7 are connected to a first light emitting control line Em1, a source of the first switching transistor T1 is connected to a source of the second switching transistor T2 and a first reference voltage source VDD, and a drain of the first switching transistor T1 is connected to a source of the fourth switching transistor T4 and a source of the first driving transistor DTFT1. A gate of the second switching transistor T2 is connected to a gate of the eighth switching transistor T8 and a second light emitting control line Em2, and a drain of the second switching transistor T2 is connected to a source of the fifth switching transistor T5 and a source of the second switching transistor DTFT2. A gate of the third switching transistor T3 is connected to a gate of the fourth switching transistor T4 and a first scanning line San1, a source of the third switching transistor T3 is connected to the data line Data, a drain of the third switching transistor T3 is connected to a second terminal b1 of the first storage capacitor C1 and a source of the seventh switching transistor T7. A drain of the fourth switching transistor T4 is connected to a first terminal a1 of the first storage capacitor C1 and a gate of the first driving transistor DTFT1. A gate of the fifth switching transistor T5 is connected to a gate of the sixth switching transistor T6 and the second scanning line Scan2, and a drain of the fifth switching transistor T5 is connected to a first terminal a2 of the second storage capacitor C2 and a gate of the second driving transistor DTFT2. A source of the sixth switching transistor T6 is connected to the data line Data, a drain of the sixth switching transistor T6 is connected to a second terminal b2 of the second storage capacitor C2 and a source of the eighth switching transistor T8. A drain of the seventh switching transistor T7 is connected to a source of the ninth switching transistor T9, a drain of the first driving transistor DTFT1 and a first terminal of the first display device, and a second terminal of the first display device is grounded. A drain of the eighth switching transistor T8 is connected to a source of the tenth switching transistor T10, a drain of the second driving transistor DTFT2 and a first terminal of the second display device, and a second terminal of the second display device is grounded. A gate of the ninth switching transistor T9 is connected to a gate of the tenth switching transistor T10 and the second scanning line Scan2, and a drain of the ninth switching transistor T9 is grounded. A drain of the tenth switching transistor T10 is grounded.

In order to make the pixel circuit have better performance so that each pixel unit can be well controlled, the first switching transistor T1, the second switching transistor T2, the third switching transistor T3, the fourth switching transistor T4, the fifth switching transistor T5, the sixth switching transistor T6, the seventh switching transistor T7, the eighth switching transistor T8, the ninth switching transistor T9, the tenth switching transistor T10, the first driving transistor DTFT1 and the second driving transistor DTFT2 are all N-type thin film transistors.

In connection with Figs. 3 and 4, a driving method of the pixel circuit is further provided in this embodiment, and the driving method particularly comprises the following six time periods from a first time period to a sixth time period.

Reset stage (a first time period): a high level signal is inputted in the first scanning line Scan1, the second scanning line Scan2, the first light emitting control line Em1 and the second light emitting control line Em2. The first switching transistor T1, the second switching transistor T2, the third switching transistor T3, the fourth switching transistor T4, the fifth switching transistor T5, the sixth switching transistor T6, the seventh switching transistor T7, the eighth switching transistor T8, the ninth switching transistor T9 and the tenth switching transistor T10 are all turned on, and the first reference voltage source sets a potential at the first terminal a1 of the first storage capacitor C1 and a potential at the first terminal a2 of the second storage capacitor C2 to be voltage Vdd of the first reference voltage source and supplies a first voltage V1 to the data line Data. At this time, since the third switching transistor T3, the fourth switching transistor T4, the fifth switching transistor T5 and the sixth switching transistor T6 are all turned on, both a potential at the second terminal b1 of the first storage capacitor C1 and a potential at the second terminal b2 of the second storage capacitor C2 are set to be the first voltage V1, that is, a1=Vdd, b1=V1, a2=Vdd, and b2=V1.

Discharge stage (a second time period): a high level signal is inputted in the first scanning line Scan1 and the second scanning line Scan2, and a low level signal is inputted in the first light emitting control line Em1 and the second light emitting control line Em2. The third switching transistor T3, the fourth switching transistor T4, the fifth switching transistor T5, the sixth switching transistor T6, the ninth switching transistor T9, and the tenth switching transistor T10 are all turned on, both the first storage capacitor C1 and the second storage capacitor C2 discharge, and the potential at the first terminal a1 of the first storage capacitor C1 and the potential at the first terminal a2 of the second storage capacitor C2 are discharged to be a threshold voltage Vth1 of the first driving transistor DTFT1 and a threshold voltage Vth2 of the second driving transistor DTFT2. In addition, since the ninth switching transistor T9 and the tenth switching transistor T10 are turned on, current in the circuit will not flow through the first display device OLED1 and the second display device OLED2, indirectly reducing power consumption of the first display device OLED1 and the second display device OLED2.

Continuous discharge stage (a third time period): a low level signal is inputted in the first scanning line Scan1, the first light emitting control line Em1 and the second light emitting control line Em2, a high level signal is inputted in the second scanning line Scan2, and a second voltage V2 is supplied to the data line Data. At this time, the potential at the second terminal b2 of the second storage capacitor C2 accordingly becomes V2, and the potential at the first terminal a2 of the second storage capacitor C2 is maintained at Vth2, so that a voltage difference between the two terminals of the first storage capacitor C1 is Vth1-V1, and a voltage difference between the two terminals of the second storage capacitor C2 is Vth2-V2, wherein V1>V2.

Voltage stabilization stage (a fourth time period): a low level signal is inputted in the first scanning line Scan1, the second scanning line Scan2, the first light emitting control line Em1 and the second light emitting control line Em2. The first switching transistor T1, the second switching transistor T2, the third switching transistor T3, the fourth switching transistor T4, the fifth switching transistor T5, the sixth switching transistor T6, the seventh switching transistor T7, the eighth switching transistor T8, the ninth switching transistor T9 and the tenth switching transistor T10 are all turned off, and the voltage differences between the two terminals of the first storage capacitor C1 and the second storage capacitor C2 are stabilized, both of which are preparing for the light emitting stage.

First light emitting stage (a fifth time period): a low level signal is inputted in the first scanning line Scan1 and the second scanning line Scan2, and a high level signal is inputted in the first light emitting control line Em1, and a low level signal is inputted in the second light emitting control line Em2. The first switching transistor T1 and the seventh switching transistor T7 are turned on, the potential V1 at the second terminal b1 of the first storage capacitor C1 becomes an anode potential Voled1 of the first display device OLED1, the potential at the first terminal a1 of the first storage capacitor C1 is Vth1-V1+Voled1, and the first driving transistor DTFT1 drives the first display device OLED1 to emit light. At this time, a current flowing through the first display device OLED1 may be obtained based on a saturation current of the thin film transistor:

$$Ioled1 = K(VGS-Vth1)^2$$

$$=K[(Vth1\text{-}V1+Voled1)\ \text{-}\ Voled1 - Vth1]^2$$

$$= K\cdot(V1)^2$$

Second light emitting stage (a sixth time period): a low level signal is inputted in the first scanning line Scan1 and the second scanning line Scan2, a low level signal is inputted in the first light emitting control line Em1, and a high level signal is inputted in the second light emitting control line Em2. At this time, the second switching transistor T2 and the eighth switching transistor T8 are turned on, the potential V2 at the second terminal b2 of the second storage capacitor C2 becomes an anode potential Voled2 of the second display device OLED2, the potential at the first terminal a2 of the second storage capacitor C2 becomes Vth2-V2+Voled2, and the second driving transistor DTFT2 drives the second display device OLED2 to emit light. With the same principle, the current flowing through the second display device OLED2 is $Ioled2=K\cdot(V2)^2$.

Based on the above obtained currents of the first display device OLED1 and the second display device OLED2, the pixel circuit not only achieves a high resolution display, but also avoids the influence of the threshold voltage of the driving transistor on the pixel circuit, so that the array substrate of the embodiment obtains a more uniform display.

It should be pointed out that, the method for driving respective sub-pixels on the array substrate in the embodiment is described only taking the above pixel circuit as an example. However, the pixel circuit in the embodiment is not limited to the above pixel circuit. Any pixel circuit which can achieve the time-sharing driving method can be applied to the array substrate of the embodiment, and falls within the protection scope of the embodiment.

Accordingly, the embodiment further provides a display panel, which comprises the above array substrate, and thus can achieve a high resolution display.

Accordingly, the embodiment further provides a display device, which comprises the above display panel, and may be any product or component having a display function such as a liquid crystal panel, an OLED panel, a mobile phone, a tablet computer, a TV, a display, a notebook computer, a digital photo frame, and a navigator.

Because the display device in the embodiment comprises the above display panel, so its resolution is higher, and its performance is better.

Of course, the display device in the embodiment may also comprise other conventional structures, such as the display driving unit, etc.

It should be understood that, the above embodiments are only exemplary embodiments employed to illustrate the principle of the invention, and the invention is not limited thereto. For ordinary persons skilled in the art, various variants and improvements can be made without departing from the scope of the invention, and these variants and improvements are also regarded as the protection scope of the invention.

## Claims

1. An array substrate, comprising a plurality of circulating units (100) and a plurality of pixel circuits, wherein

each circulating unit (100) consists of four sub-pixel units (10) located in four consecutive columns and two consecutive rows, sub-pixel units (10) in any two adjacent columns are located in different rows and have different colors, and sub-pixel units (10) in at least one row have different colors wherein each subpixel unit of a circulating unit is connected to a different data line;

each sub-pixel unit (10) is connected to a single pixel circuit, and each sub-pixel unit (10) comprises a first sub-pixel (11) and a second sub-pixel (12) located in the same column and having the same color;

**characterized in that** each pixel circuit of the plurality of pixel circuits comprises a first sub-pixel circuit and a second sub-pixel circuit, the first sub-pixel circuit comprises a first driving transistor (DTFT1) and the second sub-pixel circuit comprises a second driving transistor (DTFT2), the first sub-pixel circuit and the second sub-pixel circuit share a compensation unit, and are controlled by a same data line (Data), which is connected to a control unit; the compensation unit is configured to adjust a gate voltage of the first driving transistor (DTFT1) in the first sub-pixel circuit to eliminate influence of a threshold voltage of the first driving transistor (DTFT1) on a driving current of the first sub-pixel (11), and to adjust a gate voltage of the second driving transistor (DTFT2) in the second sub-pixel circuit to eliminate influence of a threshold voltage of the second driving transistor (DTFT2) on a driving current of the second sub-pixel (12); the compensation unit comprises a first switching transistor (T1), a second switching transistor (T2), a third switching transistor (T3), a fourth switching transistor (T4), a fifth switching transistor (T5), a sixth switching transistor (T6), a seventh switching transistor (T7), an eighth switching transistor (T8), a ninth switching transistor (T9), a tenth switching transistor (T10), a first storage capacitor (C1) and a second storage capacitor (C2); a gate of the first switching transistor (T1) and a gate of the seventh switching transistor (T7) are connected to a first light emitting control line (Em1), a source of the first switching transistor (T1) is connected to a source of the second switching transistor (T2) and a first reference voltage source (Vdd), and a drain of the first switching transistor (T1) is connected to a source of the fourth switching transistor (T4) and a source of the first driving transistor (DTFT1); a gate of the second switching transistor (T2) is connected to a gate of the eighth switching transistor (T8) and a second light emitting control line (Em2), and a drain of the second switching transistor (T2) is connected to a source of the fifth switching transistor (T5) and a source of the second switching transistor (T2); a gate of the third switching transistor (T3) is connected to a gate of the fourth switching transistor (T4) and a first scanning line (Scan1), a source of the third switching transistor (T3) is connected to the data line (Data), a drain of the third switching transistor (T3) is connected to a second terminal of the first storage capacitor (C1) and a source of the seventh switching transistor (T7); a drain of the fourth switching transistor (T4) is connected to a first terminal of the first storage capacitor (C1) and a gate of the first driving transistor (DTFT1); a gate of the fifth switching transistor (T5) is connected to a gate of the sixth switching transistor (T6) and a second scanning line (Scan2), and a drain of the fifth switching transistor (T5) is connected to a first terminal of the second storage capacitor (C2) and a gate of the second driving transistor (DTFT2); a source of the sixth switching transistor (T6) is connected to the data line (Data), a drain of the sixth switching transistor (T6) is connected to a second terminal of the second storage capacitor (C2) and a source of the eighth switching transistor (T8); a drain of the seventh switching transistor

(T7) is connected to a source of the ninth switching transistor (T9), a drain of the first driving transistor (DTFT1) and a first terminal of the first sub-pixel (10), and a second terminal of the first sub-pixel (10) is grounded; a drain of the eighth switching transistor (T8) is connected to a source of the tenth switching transistor (T10), a drain of the second driving transistor (DTFT2) and a first terminal of the second sub-pixel (12), and a second terminal of the second sub-pixel (12) is grounded; a gate of the ninth switching transistor (T9) is connected to a gate of the tenth switching transistor (T10) and the second scanning line (Scan2), and a drain of the ninth switching transistor (T9) is grounded; and a drain of the tenth switching transistor (T10) is grounded;

and the pixel circuit is configured to drive the first sub-pixel (11) when a first frame picture is displayed by delivering a first light emitting signal through the first light emitting line during the first emitting stage, and to drive the second sub-pixel when a second frame picture is displayed by delivering a second light emitting signal through the second light emitting line during the second emitting stage.

2. The array substrate according to claim 1, wherein the circulating unit (100) comprises one red sub-pixel unit (10), one blue sub-pixel unit (10) and two green sub-pixel units (10).

3. The array substrate according to claim 1, wherein the circulating unit (100) comprises one red sub-pixel unit (10), one green sub-pixel unit (10), one blue sub-pixel unit (10) and one white sub-pixel unit (10).

4. The array substrate according to any one of claims 1 to 3, wherein

the first sub-pixel circuit is connected to the first sub-pixel (11), and the second sub-pixel circuit is connected to the second sub-pixel (12); and
the control unit is configured to control the first sub-pixel circuit to drive the first sub-pixel (11) when the first frame picture is displayed, and to control the second sub-pixel circuit to drive the second sub-pixel (12) when the second frame picture is displayed.

5. The array substrate according to claim 4, further comprising a plurality of data lines (Data), and the first sub-pixel circuit and the second sub-pixel circuit in each pixel circuit are connected to the same data line (Data).

6. The array substrate according to claim 1, wherein each of the first switching transistor (T1), the second switching transistor (T2), the third switching transistor (T3), the fourth switching transistor (T4), the fifth switching transistor (T5), the sixth switching transistor (T6), the seventh switching transistor (T7), the eighth switching transistor (T8), the ninth switching transistor (T9), the tenth switching transistor (T10), the first driving transistor (DFTF1) and the second driving transistor (DTFT2) is an N-type transistor.

7. A driving method of an array substrate according to any one of claims 1 to 6, comprising:

driving, by the pixel circuit, the first sub-pixel (11) in the sub-pixel unit (10) connected to the pixel circuit when a first frame picture is displayed; and
driving, by the pixel circuit, the second sub-pixel (12) in the sub-pixel unit (10) connected to the pixel circuit when a second frame picture is displayed.

8. A display panel, comprising the array substrate according to any one of claims 1 to 6.

9. A display device, comprising the display panel according to claim 8.

**Patentansprüche**

1. Arraysubstrat, mehrere Zirkulierungseinheiten (100) und mehrere Pixelschaltungen aufweisend, wobei

jede Zirkulierungseinheit (100) aus vier Subpixeleinheiten (10) besteht, die in vier aufeinanderfolgenden Spalten und zwei aufeinanderfolgenden Zeilen angeordnet sind, Subpixeleinheiten (10) in zwei beliebigen benachbarten Spalten in unterschiedlichen Zeilen angeordnet sind und unterschiedliche Farben haben, und Subpixeleinheiten (10) in mindestens einer Zeile unterschiedliche Farben haben, wobei jede Subpixeleinheit einer Zirkulierungseinheit mit einer unterschiedlichen Datenleitung verbunden ist;
jede Subpixeleinheit (10) mit einer einzelnen Pixelschaltung verbunden ist, und jede Subpixeleinheit (10) ein erstes Subpixel (11) und ein zweites Subpixel (12) aufweist, die in derselben Spalte angeordnet sind und dieselbe Farbe haben; **dadurch gekennzeichnet, dass**

jede Pixelschaltung der mehreren Pixelschaltungen eine erste Subpixelschaltung und eine zweite Subpixelschaltung aufweist, die erste Subpixelschaltung einen ersten Ansteuertransistor (DTFT1) aufweist und die zweite Subpixelschaltung einen zweiten Ansteuertransistor (DTFT2) aufweist, die erste Subpixelschaltung und die zweite Subpixelschaltung sich eine Kompensationseinheit teilen und durch eine gleiche Datenleitung (Data) gesteuert werden, die mit einer Steuereinheit verbunden ist; die Kompensationseinheit konfiguriert ist, um eine Gatespannung des ersten Ansteuertransistors (DTFT1) in der ersten Subpixelschaltung einzustellen, um einen Einfluss einer Schwellenspannung des ersten Ansteuertransistors (DTFT1) auf einen Ansteuerstrom des ersten Subpixels (11) zu eliminieren, und eine Gatespannung des zweiten Ansteuertransistors (DTFT2) in der zweiten Subpixelschaltung einzustellen, um einen Einfluss einer Schwellenspannung des zweiten Ansteuertransistors (DTFT2) auf einen Ansteuerstrom des zweiten Subpixels (12) zu eliminieren; die Kompensationseinheit einen ersten Schalttransistor (T1), einen zweiten Schalttransistor (T2), einen dritten Schalttransistor (T3), einen vierten Schalttransistor (T4), einen fünften Schalttransistor (T5), einen sechsten Schalttransistor (T6), einen siebten Schalttransistor (T7), einen achten Schalttransistor (T8), einen neunten Schalttransistor (T9), einen zehnten Schalttransistor (T10), einen ersten Speicherkondensator (C1) und einen zweiten Speicherkondensator (C2) aufweist; ein Gate des ersten Schalttransistors (T1) und ein Gate des siebten Schalttransistors (T7) mit einer ersten Lichtemissionssteuerleitung (Em1) verbunden sind, eine Source des ersten Schalttransistors (T1) mit einer Source des zweiten Schalttransistors (T2) und einer ersten Referenzspannungsquelle (Vdd) verbunden ist, und ein Drain des ersten Schalttransistors (T1) mit einer Source des vierten Schalttransistors (T4) und einer Source des ersten Ansteuertransistors (DTFT1) verbunden ist; ein Gate des zweiten Schalttransistors (T2) mit einem Gate des achten Schalttransistors (T8) und einer zweiten Lichtemissionssteuerleitung (Em2) verbunden ist, und ein Drain des zweiten Schalttransistors (T2) mit einer Source des fünften Schalttransistors (T5) und einer Source des zweiten Schalttransistors (T2) verbunden ist; ein Gate des dritten Schalttransistors (T3) mit einem Gate des vierten Schalttransistors (T4) und einer ersten Abtastleitung (Scan1) verbunden ist, eine Source des dritten Schalttransistors (T3) mit der Datenleitung (Data) verbunden ist, ein Drain des dritten Schalttransistors (T3) mit einem zweiten Anschluss des ersten Speicherkondensators (C1) und einer Source des siebten Schalttransistors (T7) verbunden ist; ein Drain des vierten Schalttransistors (T4) mit einem ersten Anschluss des ersten Speicherkondensators (C1) und einem Gate des ersten Ansteuertransistors (DTFT1) verbunden ist; ein Gate des fünften Schalttransistors (T5) mit einem Gate des sechsten Schalttransistors (T6) und einer zweiten Abtastleitung (Scan2) verbunden ist, und ein Drain des fünften Schalttransistors (T5) mit einem ersten Anschluss des zweiten Speicherkondensators (C2) und einem Gate des zweiten Ansteuertransistors (DTFT2) verbunden ist; eine Source des sechsten Schalttransistors (T6) mit der Datenleitung (Data) verbunden ist, ein Drain des sechsten Schalttransistors (T6) mit einem zweiten Anschluss des zweiten Speicherkondensators (C2) und einer Source des achten Schalttransistors (T8) verbunden ist; ein Drain des siebten Schalttransistors (T7) mit einer Source des neunten Schalttransistors (T9), einem Drain des ersten Ansteuertransistors (DTFT1) und einem ersten Anschluss des ersten Subpixels (10) verbunden ist, und ein zweiter Anschluss des ersten Subpixels (10) geerdet ist; ein Drain des achten Schalttransistors (T8) mit einer Source des zehnten Schalttransistors (T10), einem Drain des zweiten Ansteuertransistors (DTFT2) und einem ersten Anschluss des zweiten Subpixels (12) verbunden ist, und ein zweiter Anschluss des zweiten Subpixels (12) geerdet ist; ein Gate des neunten Schalttransistors (T9) mit einem Gate des zehnten Schalttransistors (T10) und der zweiten Abtastleitung (Scan2) verbunden ist, und ein Drain des neunten Schalttransistors (T9) geerdet ist; und ein Drain des zehnten Schalttransistors (T10) geerdet ist; und die Pixelschaltung konfiguriert ist, um das erste Subpixel (11) anzusteuern, wenn ein erstes Einzelbild angezeigt wird, indem sie während der ersten Emissionsstufe ein erstes Lichtemissionssignal durch die erste Lichtemissionsleitung liefert, und das zweite Subpixel anzusteuern, wenn ein zweites Einzelbild angezeigt wird, indem sie während der zweiten Emissionsstufe ein zweites Lichtemissionssignal durch die zweite Lichtemissionsleitung liefert.

2. Arraysubstrat nach Anspruch 1, wobei die Zirkulierungseinheit (100) eine rote Subpixeleinheit (10), eine blaue Subpixeleinheit (10) und zwei grüne Subpixeleinheiten (10) aufweist.

3. Arraysubstrat nach Anspruch 1, wobei die Zirkulierungseinheit (100) eine rote Subpixeleinheit (10), eine grüne Subpixeleinheit (10), eine blaue Subpixeleinheit (10) und eine weiße Subpixeleinheit (10) aufweist.

4. Arraysubstrat nach einem der Ansprüche 1 bis 3, wobei

die erste Subpixelschaltung mit dem ersten Subpixel (11) verbunden ist und die zweite Subpixelschaltung mit dem zweiten Subpixel (12) verbunden ist; und die Steuereinheit konfiguriert ist, um die erste Subpixelschaltung zu veranlassen, das erste Subpixel (11) anzusteuern, wenn das erste Einzelbild angezeigt wird, und die zweite Subpixelschaltung zu veranlassen, das zweite Subpixel (12) anzusteuern, wenn das zweite Einzelbild angezeigt wird.

5. Arraysubstrat nach Anspruch 4, ferner mehrere Datenleitungen (Data) aufweisend, und wobei die erste Subpixelschaltung und die zweite Subpixelschaltung in jeder Pixelschaltung mit derselben Datenleitung (Data) verbunden sind.

6. Arraysubstrat nach Anspruch 1, wobei der erste Schalttransistor (T1), der zweite Schalttransistor (T2), der dritte Schalttransistor (T3), der vierte Schalttransistor (T4), der fünfte Schalttransistor (T5), der sechste Schalttransistor (T6) der siebte Schalttransistor (T7), der achte Schalttransistor (T8), der neunte Schalttransistor (T9), der zehnte Schalttransistor (T10), der erste Ansteuertransistor (DFTF1) und der zweite Ansteuertransistor (DTFT2) ein n-Transistor ist.

7. Ansteuerungsverfahren für ein Arraysubstrat nach einem der Ansprüche 1 bis 6, aufweisend:

Ansteuern des ersten Subpixels (11) in der Subpixeleinheit (10), die mit der Pixelschaltung verbunden ist, durch die Pixelschaltung, wenn ein erstes Einzelbild angezeigt wird; und
Ansteuern des zweiten Subpixels (12) in der Subpixeleinheit (10), die mit der Pixelschaltung verbunden ist, durch die Pixelschaltung, wenn ein zweites Einzelbild angezeigt wird.

8. Anzeigetafel, das Arraysubstrat nach einem der Ansprüche 1 bis 6 aufweisend.

9. Anzeigevorrichtung, die Anzeigetafel nach Anspruch 8 aufweisend.

**Revendications**

1. Substrat de réseau, comprenant une pluralité d'unités de circulation (100) et une pluralité de circuits de pixels, dans lequel

chaque unité de circulation (100) se compose de quatre unités de sous-pixel (10) situées dans quatre colonnes consécutives et deux rangées consécutives, des unités de sous-pixel (10) dans deux colonnes adjacentes quelconques sont situées dans des rangées différentes et ont des couleurs différentes, et des unités de sous-pixels (10) dans au moins une rangée ont des couleurs différentes, chaque unité de sous-pixel d'une unité de circulation étant connectée à une ligne de données différente ;
chaque unité de sous-pixel (10) est connectée à un seul circuit de pixel, et chaque unité de sous-pixel (10) comprend un premier sous-pixel (11) et un deuxième sous-pixel (12) situés dans la même colonne et ayant la même couleur ;
**caractérisé en ce que** chaque circuit de pixel de la pluralité de circuits de pixel comprend un premier circuit de sous-pixel et un deuxième circuit de sous-pixel, le premier circuit de sous-pixel comprend un premier transistor d'attaque (DTFT1) et le deuxième circuit de sous-pixel comprend un deuxième transistor d'attaque (DTFT2), le premier circuit de sous-pixel et le deuxième circuit de sous-pixel partagent une unité de compensation, et sont commandés par une même ligne de données (Data), qui est connectée à une unité de commande ; l'unité de compensation est configurée pour ajuster une tension de grille du premier transistor d'attaque (DTFT1) dans le premier circuit de sous-pixel afin d'éliminer l'influence d'une tension de seuil du premier transistor d'attaque (DTFT1) sur un courant d'attaque du premier sous-pixel (11), et pour ajuster une tension de grille du second transistor d'attaque (DTFT2) dans le second circuit de sous-pixel pour éliminer l'influence d'une tension de seuil du second transistor d'attaque (DTFT2) sur un courant d'attaque du second sous-pixel (12) ; l'unité de compensation comprend un premier transistor de commutation (T1), un deuxième transistor de commutation (T2), un troisième transistor de commutation (T3), un quatrième transistor de commutation (T4), un cinquième transistor de commutation (T5), un sixième transistor de commutation (T6), un septième transistor de commutation (T7), un huitième transistor de commutation (T8), un neuvième transistor de commutation (T9), un dixième transistor de commutation (T10), un premier condensateur de stockage (C1) et un deuxième condensateur de stockage (C2) ; une grille du premier transistor de commutation (T1) et une grille du septième transistor de commutation (T7) sont connectées à une première ligne de commande électroluminescente (Em1), une source du premier transistor de commutation (T1) est connectée à une source du deuxième transistor de commutation (T2) et à une première source de tension de référence (Vdd), et un drain du premier transistor de commutation (T1) est connecté à une source du quatrième transistor de commutation (T4) et à une source du premier transistor d'attaque (DTFT1) ; une grille du second transistor de commutation (T2) est connectée à une grille du huitième transistor de commutation (T8) et à une seconde ligne de commande électroluminescente (Em2), et un drain du second transistor de commutation (T2) est connecté à une source du cinquième transistor de commutation (T5) et à une source du deuxième transistor de commutation (T2) ; une grille du troisième transistor de commutation (T3) est connectée à une grille du quatrième transistor de commutation (T4) et à une première ligne de balayage (Scan1), une source du troisième transistor de commutation (T3) est connectée à la ligne de données (Data), un drain du troisième transistor de commutation (T3) est connecté à une deuxième borne du premier condensateur de stockage (C1) et à une source du septième transistor de commutation (T7) ; un drain du quatrième transistor de commutation (T4) est connecté à une première borne du premier condensateur de stockage (C1) et à une grille du premier transistor d'attaque (DTFT1) ; une grille du cinquième transistor de commutation (T5) est connectée à une grille du sixième transistor de commutation (T6) et à une seconde ligne de balayage (Scan2), et un drain du cinquième transistor de commutation (T5) est connecté à une première borne du deuxième condensateur de stockage (C2) et à une grille du deuxième transistor d'attaque (DTFT2) ; une source du sixième transistor de commutation (T6) est connectée à la ligne de données (Data), un drain du sixième transistor de commutation (T6) est connecté à une seconde borne du second condensateur de stockage (C2) et à une source du huitième transistor de commutation (T8) ; un drain du septième transistor de commutation (T7) est connecté à une source du neuvième transistor de commutation (T9), à un drain du premier transistor d'attaque (DTFT1) et à une première borne du premier sous-pixel (10), et une deuxième borne du premier sous-pixel (10) est mise à la terre ; un drain du huitième transistor de commutation (T8) est connecté à une source du dixième transistor de commutation (T10), à un drain du deuxième transistor d'attaque (DTFT2) et à une première borne du deuxième sous-pixel (12), et une deuxième borne du deuxième sous-pixel (12) est mise à la masse ; une grille du neuvième transistor de commutation (T9) est connectée à une grille du dixième transistor de commutation (T10) et à la deuxième ligne de balayage (Scan2), et un drain du neuvième transistor de commutation (T9) est mis à la masse ; et un drain du dixième transistor de commutation (T10) est mis à la masse ; et le circuit de pixel est configuré pour attaquer le premier sous-pixel (11) lorsqu'une première image de trame est affichée en délivrant un premier signal électroluminescent à travers la première ligne électroluminescente pendant la première étape d'émission, et pour attaquer le second sous-pixel lorsqu'une deuxième image de trame est affichée en délivrant un deuxième signal électroluminescent à travers la deuxième ligne électroluminescente pendant la deuxième étape d'émission.

2. Substrat de réseau selon la revendication 1, dans lequel l'unité de circulation (100) comprend une unité de sous-pixel rouge (10), une unité de sous-pixel bleu (10) et deux unités de sous-pixel vert (10).

3. Substrat de réseau selon la revendication 1, dans lequel l'unité de circulation (100) comprend une unité de sous-pixel rouge (10), une unité de sous-pixel vert (10), une unité de sous-pixel bleu (10) et une unité de sous-pixel blanc (10).

4. Substrat de réseau selon l'une quelconque des revendications 1 à 3, dans lequel le premier circuit de sous-pixel est connecté au premier sous-pixel (11), et le deuxième circuit de sous-pixel est connecté au deuxième sous-pixel (12) ; et
l'unité de commande est configurée pour commander le premier circuit de sous-pixel pour attaquer le premier sous-pixel (11) lorsque la première image de trame est affichée, et pour commander le deuxième circuit de sous-pixel pour attaquer le deuxième sous-pixel (12) lorsque la deuxième image de trame est affichée.

5. Substrat de réseau selon la revendication 4, comprenant en outre une pluralité de lignes de données (Data), et le premier circuit de sous-pixel et le deuxième circuit de sous-pixel dans chaque circuit de pixel sont connectés à la même ligne de données (Data).

6. Substrat de réseau selon la revendication 1, dans lequel chaque transistore parmi le premier transistor de commutation (T1), le deuxième transistor de commutation (T2), le troisième transistor de commutation (T3), le quatrième transistor de commutation (T4), le cinquième transistor de commutation (T5), le sixième transistor de commutation (T6), le septième transistor de commutation (T7), le huitième transistor de commutation (T8), le neuvième transistor de commutation (T9), le dixième transistor de commutation (T10), le premier transistor d'attaque (DFTF1) et le deuxième transistor d'attaque (DTFT2) est un transistor de type N.

7. Procédé d'attaque d'un substrat de réseau selon l'une quelconque des revendications 1 à 6, comprenant les étapes consistant à :

attaquer, par le circuit de pixel, le premier sous-pixel (11) dans l'unité de sous-pixel (10) connectée au circuit de pixel lorsqu'une première image de trame est affichée ; et
attaquer, par le circuit de pixel, le deuxième sous-pixel (12) dans l'unité de sous-pixel (10) connectée au circuit de pixel lorsqu'une deuxième image de trame est affichée.

8. Panneau d'affichage, comprenant le substrat de réseau selon l'une quelconque des revendications 1 à 6.

9. Dispositif d'affichage, comprenant le panneau d'affichage selon la revendication 8.

Fig. 1

Fig. 2

Fig. 3

Fig. 4

**EP 3 226 232 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104134426
- CN 103745684